# FASCICULE DE BREVET EUROPEEN

(11) **EP 4 005 375 B1**
(45) Date de publication et mention de la délivrance du brevet: **22.04.2026**
(21) Numéro de dépôt: 21210407.9
(22) Date de dépôt: 25.11.2021
(51) Int. Cl.: A01K 5/00

(54) **EQUIPEMENT AGRICOLE DE DISTRIBUTION DE PRODUIT, TELLE QU UNE MÉLANGEUSE, COMPRENANT UNE CUVE AVEC AU MOINS UNE OUVERTURE DE DÉCHARGEMENT**
LANDWIRTSCHAFTLICHES GERÄT ZUR VERTEILUNG EINES PRODUKTS, WIE Z. B. EIN MISCHER, BESTEHEND AUS EINEM BEHÄLTER MIT MINDESTENS EINER AUSLASSÖFFNUNG
FARMING EQUIPMENT FOR DISPENSING A PRODUCT, SUCH AS A MIXER, COMPRISING A VESSEL WITH AT LEAST ONE OPENING FOR UNLOADING

(30) Priorité: 30.11.2020 FR 2012407
(43) Date de publication de la demande: 01.06.2022
(73) Titulaire: Kuhn-Audureau SAS, 85260 La Copechagnière (FR)
(72) Inventeur: TOULOTTE, Loïc, 44240 LA CHAPELLE SUR ERDRE (FR); PELE, Nicolas, 85170 LE POIRÉ SUR VIE (FR)
(74) Mandataire: Ipsilon

(56) Documents cités:
- FR-A1- 3 071 130
- US-B2- 7 874 720

## Description

La présente invention concerne le domaine du machinisme et des installations agricoles, plus particulièrement les équipements pour la distribution de matières à partir d'un contenant mobile ou fixe, notamment de produits d'alimentation animale, en particulier de mélanges à base de nourriture ensilée ou autre, dans les étables ou analogues.

De manière connue, les mélangeuses présentent habituellement une ouverture de décharge, de forme globalement quadrilatérale, usuellement rectangulaire, prévue dans la paroi de la cuve (voir par exemple la référence 3 dans le document EP3345475A1). Lors de la transition du produit (mélange) contenu dans la cuve vers l'extérieur, via l'ouverture de décharge, on constate une accumulation de produit dans le(s) coin(s) de cette ouverture au niveau de la zone du second bord de celle-ci, contre lequel la vis de mélange achemine le produit (il s'agit du bord d'ouverture croisé en second lieu lors du déplacement de l'organe de mélange/déchargement). Le produit mélangé, transporté par l'organe de mélange/déchargement à rotation lente, peut se loger dans ce(s) coin(s) dit mort(s) et s'y accumuler. Parfois, un « pont solide » se constitue par agglomération/agrégation de produit déchargé s'accumulant progressivement depuis la région du bas du second côté et s'y fixant (normalement de niveau avec le fond de la cuve) : alors le processus de décharge peut s'arrêter complètement ou, plus fréquemment, la quantité déchargée est fortement réduite, ou variable dans le temps, et la consigne de déchargement n'est pas respectée sur la durée de l'opération.

Par ailleurs, de manière traditionnelle, l'ouverture de déchargement est fermée par un coulisseau, ou par une porte, qui coulisse le long d'une trajectoire en suivant la paroi de la cuve. Ce coulisseau présente une forme qui correspond à la forme de la paroi : le coulisseau sera plutôt droit s'il est placé sur la paroi latérale (d'une cuve de forme généralement elliptique) et présentera une courbure s'il est placé sur la paroi avant de cette cuve (même rayon de courbure). Lorsque du produit s'est accumulé dans la zone critique de la porte, le coulisseau ne peut plus fermer entièrement l'ouverture de décharge et du produit pourra tomber à terre à travers la portion d'ouverture non obturée. Pour pallier ce dysfonctionnement, le chauffeur doit descendre du tracteur pour dégager la zone colmatée et permettre à nouveau l'obturation totale de l'ouverture de décharge au moyen du coulisseau.

Le document EP 1 671 538 propose la mise en œuvre d'un organe auxiliaire mobile situé (avec un axe approximativement vertical) directement dans la zone du second bord de l'ouverture. Cet organe rotatif, sous la forme d'un rouleau à doigts, nécessite un entraînement pour maintenir la zone libre et transporter le produit (rapidement) à travers l'ouverture de décharge. Il est placé étroitement adjacent au second bord d'ouverture à l'extérieur de l'ouverture de décharge, et fonctionne dans une partie de la plage de hauteur de l'ouverture de décharge ou sur toute la hauteur de l'ouverture de décharge. Ainsi, quelle que soit la quantité de produit que la vis de mélange délivre à l'ouverture de décharge par unité de temps, un débit de transport uniforme et mesuré vers l'extérieur peut être garanti et aucun produit ne peut se fixer sur le second bord d'ouverture critique. Néanmoins, cette solution nécessite, d'une part, une structure de basculement pour disposer l'organe au niveau de la zone critique de l'ouverture et, d'autre part, la mise en place d'un entraînement pour l'organe auxiliaire rotatif. Il en résulte : un risque de dégradation de l'organe auxiliaire, et éventuellement du coulisseau si ce dernier est déplacé en position de fermeture avant d'avoir écarté l'organe auxiliaire rotatif à distance de l'ouverture. De plus, un tel système additionnel est couteux et nécessite un réglage précis de sa distance avec l'ouverture ainsi qu'une adaptation de la vitesse en fonction du type de produit mélangé déchargé, pour éviter que le produit déchargé ne soit pas projeté trop loin.

Le document FR3071130A1 a pour objet une machine agricole pour le transport et la distribution de produits en vrac destiné à l'alimentation animalière, comprenant une cuve montée sur un châssis roulant et comportant une ouverture obturable située sensiblement à proximité ou au niveau du fond de la cuve.

Le document US7874720B2 a pour objet une cuve mélangeuse dotée de vis sans fin comprenant une cuve pourvue d'une ouverture de déchargement pouvant être fermée au moyen d'un volet.

La présente invention a pour but général de proposer une solution plus simple, moins coûteuse et ne nécessitant aucune intervention ou action positive pour sa mise en œuvre, ce tout en permettant de remédier efficacement à l'accumulation de produit déchargé, et à la création de ponts solides. Plus précisément, par rapport au document EP 1 671 538 notamment, le but est de proposer une alternative plus simple, avec moins de réglage et d'entretien, permettant d'éviter les accumulations au niveau de l'ouverture de décharge et permettant une décharge uniforme du produit.

A cet effet, l'invention a pour objet un équipement agricole de distribution de produit, telle qu'une mélangeuse, selon l'objet de la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente, vue en perspective, un exemple d'équipement agricole sous la forme d'une mélangeuse tractée, en accord avec l'invention et illustrant une première variante de réalisation de cette dernière ;
[Fig. 2] est une vue partielle de détail, en élévation et à une échelle différente de la région de l'ouverture de déchargement de la cuve de l'équipement représenté figure 1, en accord avec une deuxième variante de réalisation de l'invention ;
[Fig. 3] est une vue partielle de détail de la région de l'ouverture de déchargement de la cuve de l'équipement comparable à la figure 2, en accord avec une troisième variante de réalisation de l'invention ;
[Fig. 4] est une vue de détail de la région de l'ouverture de déchargement de la cuve de l'équipement selon l'une des variantes de réalisation de l'invention telles que ressortant des figures 1 et 2, l'ouverture de déchargement étant à moitié obturée ;
[Fig. 5] est une vue de détail de la région de l'ouverture de déchargement de la cuve de l'équipement selon une quatrième variante de réalisation de l'invention ;
[Fig. 6] est une vue de détail similaire à celles des figures 2, 3 et 5 illustrant une cinquième variante de réalisation de l'invention.

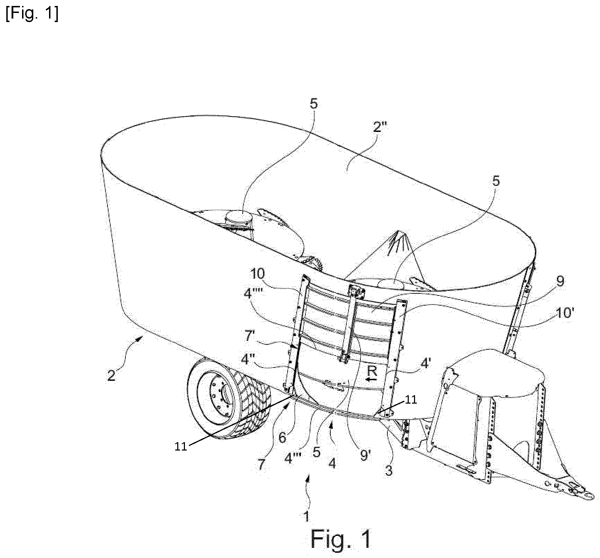

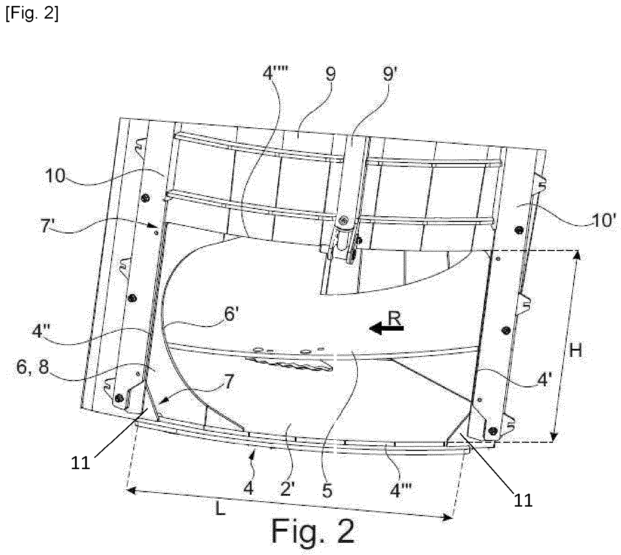

La figure 1 et partiellement les figures 2 à 6 montrent un équipement agricole (1) de distribution de produit sous la forme d'une mélangeuse, en accord avec un mode de réalisation non limitatif de l'invention.

Cet équipement (1) comprend une cuve (2) avec un fond (2') et une paroi latérale (2"), montée sur un châssis (3). Bien que dans l'exemple représenté figure 1, ce châssis (1) consiste en un châssis roulant (ici tracté avec un timon, mais éventuellement aussi automoteur), l'invention peut également s'appliquer à un équipement avec un châssis stationnaire (non représenté).

La cuve (2) comporte au moins une ouverture de déchargement (4) ménagée dans sa paroi latérale (2") et délimitant un passage de forme générale quadrilatérale, préférentiellement rectangulaire. La cuve (2) peut présenter en section une forme circulaire ou elliptique et l'ouverture (4) peut être située au niveau d'une partie sensiblement plane ou plus fréquemment au niveau d'une partie incurvée de la paroi (2"), son bord inférieur (4"') étant situé dans la continuité du fond (2') de la cuve (2) et affleurant avec ce dernier. Ainsi, notamment lorsque l'ouverture est rectangulaire, les bords latéraux (4' et 4") de l'ouverture sont toujours verticaux et droits, alors que le bord supérieur (4"") peut être droit ou incurvé. D'une manière alternative, l'ouverture de déchargement (4) ménagée dans la cuve (2) peut être de forme carrée ou reproduire la forme d'un quadrilatère quelconque.

Un organe rotatif (5) d'entrainement et d'acheminement du produit (en vrac) à travers l'ouverture (4) est monté dans ladite cuve (2) et définit pour ladite ouverture (4) des premier et second bords latéraux (4' et 4") selon le sens de rotation (R) dudit organe (5). Ainsi, le produit à décharger sera poussé à travers l'ouverture (4) en étant simultanément dirigé en direction dudit second bord (4").

Cet organe rotatif (5) est monté mobile en rotation autour d'un axe vertical perpendiculaire par rapport au plan du fond (2'). La fonction d'un tel organe rotatif (5) est par exemple de mélanger et aérer le produit, de répartir le produit dans la cuve, de racler le fond de la cuve (2) et/ou de d'éjecter le produit au travers de l'ouverture de déchargement (4). D'une manière avantageuse, l'organe rotatif (5) est une vis hélicoïdale qui s'effile vers le haut. Alternativement, l'organe rotatif est un organe mobile comprenant un ou plusieurs bras radiaux. Dans la cuve (2) de la mélangeuse représentée à la figure 1, sont montés deux organes rotatifs (5), du type vis de mélange, disposés l'un derrière l'autre. Une ouverture de déchargement (4) peut être associée à chaque organe (5) ou alors seul un des deux organes (l'organe frontal sur la figure 1) est associé à une telle ouverture (4) et assure une fonction de déchargement.

Conformément à l'invention, ladite ouverture de déchargement (4) comporte au niveau dudit second bord latéral (4") au moins une formation obstructrice (6) surfacique ou volumique réduisant la section du passage de ladite ouverture (4) et/ou déterminant au moins partiellement la géométrie de ce second bord (4").

Cette formation obstructrice (6) disposée dans la région du second bord (4") de l'ouverture (4) de forme quadrilatérale constitue un dispositif simple, statique et passif pour dévier l'écoulement du produit au travers de cette ouverture. Sa seule présence à cet endroit, combinée éventuellement à une forme particulière telle que décrite ci-après, évite/limite l'accumulation du produit dans cette zone du second bord d'ouverture favorable à un tel phénomène.

Grâce à cette formation obstructrice et déflectrice de l'invention, la dynamique de décharge de produit est meilleure, ce quelle que soit la hauteur de décharge (hauteur le cas échéant fonction de la position du coulisseau de fermeture à déplacement vertical). De ce fait, quelle que soit la quantité de produit que l'organe rotatif (5) d'entrainement et d'acheminement délivre à l'ouverture de déchargement (4) par unité de temps (cuve pleine, à moitié pleine ou presque vide), il en résulte un débit de distribution plus ou moins uniforme.

De plus, la solution proposée est de construction simple, facile à implémenter (même sur des équipements existants), peu coûteuse, dépourvue d'élément mobile, résistante et à maintenance quasi-nulle.

Toujours conformément à la présente invention et à titre de compromis favorable entre une action suffisante contre l'accumulation de produit et une réduction limitée du débit maximal de produit à décharger, la réduction de section du passage de l'ouverture de déchargement (4) résultant de la présence de ladite au moins une formation obstructrice (6) est supérieure à 2% et inférieure à 20% de ladite section de passage, préférentiellement comprise entre 2% et 15%.

Selon l'exemple représenté à la figure 1, la formation obstructrice (6) est, au moins en partie, située au niveau du coin inférieur (7) de l'ouverture de déchargement (4), formé entre le second bord latéral (4") et le bord longitudinal inférieur (4"') de l'ouverture (4). Ce bord (4"') est situé dans le plan du fond (2') de la cuve (2), et est affleurant avec ledit fond.

La formation obstructrice (6), en accord avec la variante représentée à la figure 1, est par exemple une portion de plaque de forme triangulaire avec une hypoténuse incurvée concave. La formation obstructrice (6) s'étend depuis l'angle du coin inférieur (7) jusqu'à environ la moitié de la hauteur (H) de l'ouverture de déchargement (4) et jusqu'à environ le quart de la largeur (L). De préférence, la formation obstructrice (6) s'étend depuis l'angle du coin inférieur (7) jusqu'à une valeur comprise entre un quinzième et un quart de la largeur (L) et jusqu'à une valeur comprise entre un huitième et la moitié de la hauteur (H) de l'ouverture de déchargement (4).

D'une manière particulièrement avantageuse, la présente invention peut prévoir une unique formation obstructrice (6) et que celle-ci soit disposée/implantée au niveau du coin inférieur (7), de l'ouverture de déchargement (4), formé entre le second bord latéral (4") et le bord longitudinal inférieur (4"') de l'ouverture (4). La présente invention peut alors prévoir, par exemple, que ladite formation obstructrice (6) dudit coin inférieur (7) s'étende, depuis ledit coin inférieur, en largeur, jusqu'à une largeur comprise entre un quinzième et un quart de la largeur (L) de l'ouverture de déchargement (4) et, en hauteur, jusqu'à une hauteur comprise entre un huitième et la moitié de la hauteur (H) de l'ouverture de déchargement (4). Cette formation obstructrice (6) est destinée à réduire la section de passage de l'ouverture de déchargement (4) d'au moins 2%, dans le but de dévier et donc d'éviter l'accumulation de produit dans le coin inférieur (7).

L'ouverture de décharge (4) peut présenter, par exemple, une largeur, entre le premier bord latéral (4') et le second bord latéral (4"), d'environ 1000 mm et une hauteur, entre le bord inférieur (4"') et le bord supérieur (4""), d'environ 700 mm D'ordinaire, les dimensions de l'ouverture de décharge (4) des équipements agricoles de distribution de produits connus sont comprises, pour la hauteur, entre 600 et 800 mm et, pour la largeur, entre 800 et 1200 mm.

En accord avec une autre caractéristique constructive importante de l'invention, avantageusement complémentaire de la première caractéristique précitée, ou éventuellement alternative par rapport à elle, la formation obstructrice (6) est, au moins en partie, située au niveau du coin supérieur (7') de l'ouverture de déchargement (4), formé entre le second bord latéral (4") et le bord longitudinal supérieur (4"") de ladite ouverture (4).

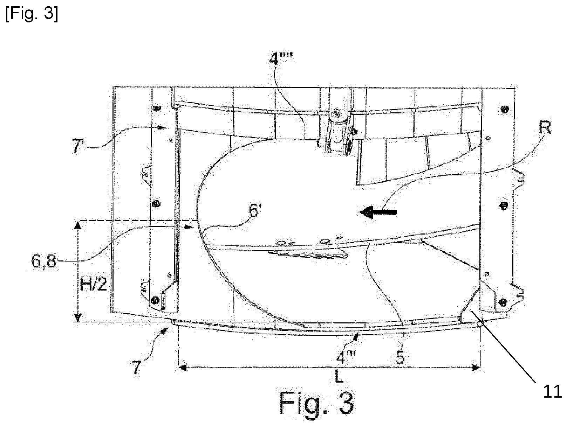

Les figures 2 et 3 illustrent chacune une formation obstructrice (6) située au niveau du coin inférieur (7) et une formation obstructrice (6) située au niveau du coin supérieur (7') de l'ouverture de déchargement (4). Les deux formations obstructrices (6) inférieure et supérieure sont avantageusement jointives au niveau de leur jonction. Elles peuvent avantageusement être réalisée d'une seule pièce (8) comme représenté sur ces figures, et dans ce cas constituer une unique formation obstructrice à double action (on pourra alors évoquer des parties supérieure et inférieure de la formation unique, en association avec le coin concerné). Elles peuvent aussi alternativement être formées chacune d'une pièce spécifique (8 et 8') qui sont arrangées entre elles de manière jointive et continue.

Il ressort des différentes variantes constructives représentées, que la ou chaque formation obstructrice (6) présente un bord fonctionnel ou d'attaque (6') définissant au moins une partie d'un profil de bord de l'ouverture de déchargement (4), opposé au premier bord (4') de cette dernière.

La figure 2 illustre une formation obstructrice (6) sous la forme d'une portion de plaque dont le profil en regard du premier bord latéral (4') est incurvé. Il s'agit d'un profil en forme de C. La formation obstructrice (6) inférieure (ou partie inférieure) présentant une surface plus importante que la formation obstructrice (6) supérieure (ou partie supérieure). La figure 3 illustre une variante du profil de la figure 2, dans laquelle les surfaces des deux parties de la formation obstructrice (6) sont plus importantes. La formation obstructrice (6) ou partie inférieure s'étend jusqu'à environ la moitié de la largeur (L) de l'ouverture de déchargement (4). On remarque également que la zone de jonction au niveau de la moitié (H/2) de la hauteur (H) de l'ouverture (4) est plus importante sur la figure 3 que sur l'exemple de la figure 2.

Dans les constructions évoquées ci-dessus, ladite ou chaque formation obstructrice (6) consiste en une portion de plaque présentant une forme triangulaire conjuguée par rapport au coin (7 ou 7') respectivement concerné, avec un côté exposé formant un bord (6') fonctionnel ou d'attaque incurvé concave ou rectiligne. Lorsque la forme de l'ouverture de déchargement (4) est carrée ou rectangulaire, la portion de plaque constituant la ou chaque formation (6) pourra avoir une forme triangulaire rectangle dont l'hypoténuse correspond au bord (6'). Par contre, lorsque la forme de l'ouverture de déchargement (4) est un parallélogramme, la portion de plaque aura une forme triangulaire quelconque.

Avantageusement, les deux côtés du ou de chaque triangle constituant la formation obstructrice (6), autres que le côté formant un bord (6') fonctionnel ou d'attaque, s'étendent respectivement jusqu'à environ la moitié de la largeur (L) et jusqu'à environ la moitié de la hauteur (H) de l'ouverture de déchargement (4), ce depuis l'angle du coin (7, 7') concerné. Une telle extension permet de contribuer bénéfiquement à l'effet recherché.

De préférence, les deux côtés du ou de chaque triangle constituant la formation obstructrice (6), autres que le côté formant un bord (6') fonctionnel ou d'attaque, s'étendent respectivement jusqu'à une valeur comprise entre un quinzième et un quart de la largeur (L) et jusqu'à une valeur comprise entre un huitième et la moitié de la hauteur (H) de l'ouverture de déchargement (4), ce depuis l'angle du coin (7, 7') concerné. Une telle extension permet de contribuer bénéfiquement et davantage à l'effet recherché.

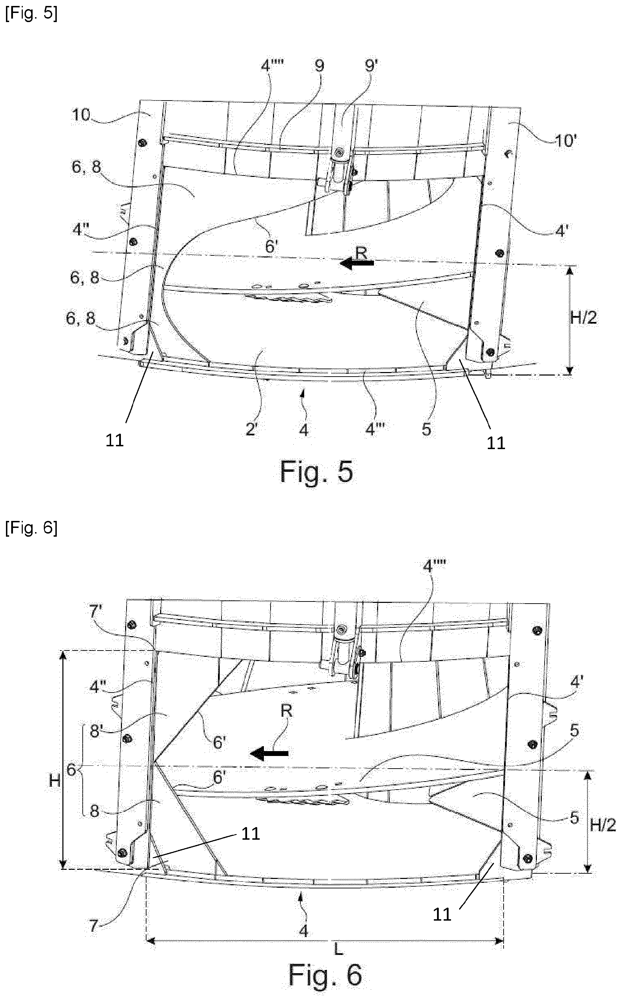

Selon une première variante de réalisation préférée, illustrée sur les figures 2 et 6, la formation obstructrice (6) s'étend sur toute la longueur du second bord latéral (4"), et est avantageusement constituée de deux parties (8 et 8') identiques, symétriques par rapport à la médiane s'étendant à la moitié (H/2) de la hauteur (H) de l'ouverture de déchargement (4). Ces deux parties (ensemble d'une seule pièce ou correspondant chacune à une pièce séparée) peuvent avantageusement présenter des formes triangulaires (avec des hypoténuses concaves dans le cas de triangles rectangles) et être jointives, de manière à configurer le second bord latéral avec un profil incurvé concave.

Selon une seconde variante de réalisation, ressortant des figures 3 et 5, la formation obstructrice (6) s'étend sur toute la longueur du second bord latéral (4"), et présente une constitution asymétrique par rapport à la ligne médiane à mi-hauteur (H/2) de l'ouverture (4).

Ainsi, la formation obstructrice (6) consiste en au moins une portion de paroi (8, 8') définissant la géométrie du second bord latéral (4") de l'ouverture de déchargement (4).

Cette portion de paroi est soit d'un seul tenant avec et intégrée à la paroi latérale (2") de la cuve (2), soit rapportée en tant que pièce séparée, fixée mécaniquement (vis, rivets) ou par soudure sur ladite paroi latérale (2"), ladite ou chaque portion de paroi (8, 8') intégrée ou rapportée s'étendant dans la continuité et de manière affleurante par rapport à ladite paroi latérale (2"). Une telle construction avec fixation par vis est représentée plus particulièrement sur les figures 2 et 4 à 6.

La formation obstructrice (6) peut notamment être formée de manière intégrée dans la paroi latérale (2") au moment du découpage de l'ouverture (4) dans celle-ci, telle que représentée à la figure 3.

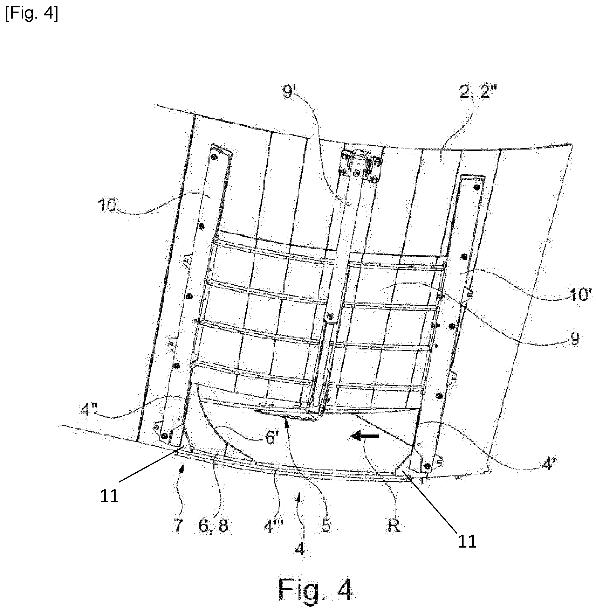

La figure 5 illustre un autre exemple de réalisation d'une formation obstructrice (6) qui est rapportée sur la cuve (2). Elle dispose d'une partie inférieure avec une surface très petite et d'une partie supérieure avec une surface très grande. La partie inférieure s'étend depuis l'angle du coin inférieur (7) jusqu'à moins d'un quart de la largeur (L) et jusqu'à moins de la moitié de la hauteur (H) de l'ouverture de déchargement (4), alors que la partie supérieure s'étend depuis l'angle du coin supérieur (7') jusqu'à plus d'un quart de la largeur (L) et jusqu'à plus de la moitié de la hauteur (H). Grâce au profil particulier du bord fonctionnel (6') de cette formation obstructrice (6), la quantité de produit déchargé est limitée même si le coulisseau (9) est ouvert totalement en début de distribution lorsque la cuve (2) est pleine. C'est une alternative à une ouverture partielle du coulisseau (9) tel que représenté à la figure 4.

La figure 6 représente une autre variante constructive de la formation obstructrice (6) rapportée sur la cuve (2). Il s'agit ici d'une formation (6) composée de deux parties ou portions de plaques (8, 8') identiques, arrangées symétriquement par rapport à la médiane, avantageusement des triangles (préférentiellement rectangles) avec des côtés exposés (des hypoténuses) rectilignes. La jonction entre les triangles (8, 8') se fait à fleur du second bord latéral (4"). Ainsi la zone de jonction est très petite voire inexistante. Selon une variante non représentée, la formation obstructrice (6) est composée de la partie de plaque inférieure (8) uniquement.

Il peut être prévu une décharge directe du produit par l'ouverture (4), notamment lorsque l'ouverture (4) est décalée sur un côté latéral de la cuve (2), comme illustré sur la figure 1. Dans le cas d'une mélangeuse notamment, le produit tombe alors directement au sol au niveau du couloir d'alimentation des animaux, le long des cornadis.

Toutefois, ledit équipement (1) peut aussi comprendre un dispositif de transfert du produit sortant de l'ouverture de déchargement (4), tel que par exemple un convoyeur transportant le produit latéralement pour le déverser sur le côté, à distance de l'ouverture (4). Dans ce cas, l'ouverture de déchargement (4) est généralement centrée et située à l'avant de la cuve (2).

Comme le montrent aussi les figures, il est prévu une porte coulissante ou coulisseau (9) pour l'obturation de l'ouverture de déchargement (4), des rails de guidage (10 et 10') étant fixés sur l'extérieur de la paroi latérale (2") de la cuve (2) le long de deux bords (4' et 4" ; 4"' et 4"") opposés de ladite ouverture (4), pour un déplacement horizontal ou vertical dudit coulisseau (9) entre une position de fermeture et une position d'ouverture de l'ouverture de déchargement (4). Dans les variantes de réalisation représentées, le coulisseau (9) est apte à être déplacer verticalement, il coulisse vers le haut ou vers le bas le long de la paroi d'une trajectoire qui suit la paroi de la cuve (2). Grâce à la formation obstructrice (6), il n'y a pas de produit qui s'accumule dans le coin inférieur (7) de l'ouverture de déchargement (4) et la fermeture du coulisseau (9) par translation vers le bas, est possible sans intervention du chauffeur.

D'une manière avantageuse, la formation obstructrice (6) telle que représentée sur les figures à l'exception de la figure 3, est rapportée en tant que pièce séparée et est fixée mécaniquement au moyen des vis fixant le rail de guidage du coulisseau (9) au niveau du deuxième bord latéral (4").

Dans le mode de distribution représenté sur les figures 1 à 3 et 5 et 6, le coulisseau (9) est représenté dans sa position rétractée c'est-à-dire que l'ouverture de déchargement (4) est totalement dégagée. Le vérin (9') de commande du coulisseau (9) est rétracté. Selon le mode de distribution représenté sur la figure 4, le coulisseau (9) est ouvert seulement à environ mi-hauteur. Ainsi la quantité de produit distribuée au début lorsque la cuve (2) est pleine est limitée. Le chauffeur peut modifier la hauteur d'ouverture du coulisseau (9) au moyen du vérin de commande (9'), qui est avantageusement hydraulique.

Par ailleurs, concernant les équipements agricoles de distribution de produits connus, certains peuvent comprendre des chanfreins (11) dans les coins inférieurs (au moins un chanfrein (11) dans l'un ou l'autre desdits coins inférieurs) de l'ouverture de décharge (4) (seulement en bas) et qui ont pour vocation de faciliter la fermeture de la porte après la distribution d'un mélange incluant des fibres longues. Ces chanfreins (11) réalisent une sorte de fonction guillotine permettant de limiter l'accumulation de fibres et donc une fermeture incomplète de la porte. La ou les formations obstructrices (6) selon la présente invention ont un autre but, le cas échéant complémentaire de celui de ces chanfreins, qui est d'assurer un débit plus régulier lors de la distribution du mélange. La présente invention, comme on peut le voir sur les figures 1 à 6, peut prévoir, le cas échéant, de tels chanfreins (11).

Bien entendu, l'invention n'est pas limitée au mode de réalisation et aux différentes variantes décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Equipement agricole (1) de distribution de produit, telle
qu'une mélangeuse, comprenant une cuve (2) avec un fond (2') et une paroi latérale (2"), montée sur un châssis (3) et comportant au moins une ouverture de déchargement (4) ménagée dans la ladite paroi latérale (2") et délimitant un passage de forme générale quadrilatérale, préférentiellement rectangulaire, un organe rotatif (5) d'entrainement et d'acheminement du produit à travers l'ouverture (4) étant monté dans ladite cuve (2) et définissant pour ladite ouverture (4) des premier et second bords latéraux (4' et 4") selon le sens de rotation (R) dudit organe (5),
ladite ouverture de déchargement (4) comportant au niveau dudit second bord latéral (4") au moins une formation obstructrice (6) surfacique ou volumique réduisant la section du passage de ladite ouverture (4) et/ou déterminant au moins partiellement la géométrie de ce second bord (4"),
la formation obstructrice étant, au moins en partie, située au niveau du coin inférieur (7) de l'ouverture de déchargement (4), formé entre le second bord latéral (4") et le bord longitudinal inférieur (4"') de l'ouverture (4), situé dans le plan du fond (2') de la cuve (2), et/ou au niveau du coin supérieur (7') de l'ouverture de déchargement (4), formé entre le second bord latéral (4") et le bord longitudinal supérieur (4"") de ladite ouverture (4) et la formation obstructrice (6) consistant en une portion de plaque présentant une forme triangulaire conjuguée par rapport audit coin inférieur ou supérieur (7), avec un côté exposé formant un bord (6') fonctionnel ou d'attaque incurvé concave ou rectiligne,
**caractérisé en ce que**
la réduction de section du passage de l'ouverture de déchargement (4) résultant de la présence de ladite au moins une formation obstructrice (6) est supérieure à 2% et inférieure à 20% de ladite section de passage, préférentiellement comprise entre 2% et 15%, et **en ce que** les deux côtés du ou de chaque triangle constituant la formation obstructrice (6), autres que le côté formant un bord (6') fonctionnel ou d'attaque, s'étendent respectivement jusqu'à une valeur comprise entre un quinzième et un quart de la largeur (L) et jusqu'à une valeur comprise entre un huitième et la moitié de la hauteur (H) de l'ouverture de déchargement (4), ce depuis l'angle du coin (7, 7') concerné.

2. Equipement agricole (1) selon la revendication 1, **caractérisé en ce que** la formation obstructrice (6) s'étend sur toute la longueur du second bord latéral (4"), et est avantageusement constituée de deux parties (8 et 8') identiques, symétriques par rapport à la médiane s'étendant à la moitié de la hauteur (H) de l'ouverture de déchargement (4).

3. Equipement agricole (1) selon l'une quelconque des revendications 1 à 2, **caractérisé en ce que** la formation obstructrice (6) est rapportée sur la cuve (2) et dispose d'une partie inférieure avec une surface très petite et d'une partie supérieure avec une surface très grande, ladite partie inférieure s'étendant depuis l'angle du coin inférieur (7) jusqu'à moins d'un quart de la largeur (L) et jusqu'à moins de la moitié de la hauteur (H) de l'ouverture de déchargement (4), alors que la partie supérieure s'étend depuis l'angle du coin supérieur (7') jusqu'à plus d'un quart de la largeur (L) et jusqu'à plus de la moitié de la hauteur (H).

4. Equipement agricole (1) selon l'une quelconque des revendications 1 à 3, **caractérisé en ce que** la formation obstructrice (6) consiste en au moins une portion de paroi (8, 8') définissant la géométrie du second bord latéral (4") de l'ouverture de déchargement (4), cette portion de paroi étant soit d'un seul tenant avec et intégrée à la paroi latérale (2") de la cuve (2), soit rapportée en tant que pièce séparée, fixée mécaniquement ou par soudure sur ladite paroi latérale (2"), ladite ou chaque portion de paroi (8, 8') intégrée ou rapportée s'étendant dans la continuité et de manière affleurante par rapport à ladite paroi latérale(2").

5. Equipement agricole (1) selon l'une quelconque des revendications 1 à 4, **caractérisé en ce qu'**il comprend une porte coulissante ou coulisseau (9) pour l'obturation de l'ouverture de déchargement (4), des rails de guidage (10 et 10') étant fixés sur l'extérieur de la paroi latérale (2") de la cuve (2) le long de deux bords (4' et 4" ; 4'" et 4"") opposés de ladite ouverture (4), pour un déplacement horizontal ou vertical dudit coulisseau (9) entre une position de fermeture et une position d'ouverture de l'ouverture de déchargement (4).

6. Equipement agricole (1) selon l'une quelconque des revendications 1 à 5, **caractérisé en ce qu'**il comprend au moins un organe rotatif (5) monté dans la cuve (2).

7. Equipement agricole (1) selon l'une quelconque des revendications 1 à 6, **caractérisé en ce qu'**il comprend un dispositif de transfert du produit sortant de l'ouverture de déchargement (4).

## Patentansprüche

1. Landwirtschaftliche Ausrüstung (1) zum Verteilen von Produkten, wie beispielsweise ein Mischwagen, mit einem Behälter (2) mit einem Boden (2') und einer Seitenwand (2"), die auf einem Rahmen (3) montiert ist und mindestens eine in der Seitenwand (2") angeordnete Entladeöffnung (4) aufweist, die einen Durchgang mit einer im Allgemeinen viereckigen, vorzugsweise rechteckigen Form begrenzt, wobei ein drehbares Element (5) zum Antreiben und Fördern des Produkts durch die Öffnung (4) in dem Behälter (2) angebracht ist und für die Öffnung (4) einen ersten und einen zweiten Seitenrand (4' und 4") entsprechend der Drehrichtung (R) des Elements (5) definiert,
wobei die Entladeöffnung (4) an dem zweiten Seitenrand (4") mindestens eine flächige oder voluminöse Sperrvorrichtung (6) aufweist, die den Durchgangsquerschnitt der Öffnung (4) verringert und/oder mindestens teilweise die Geometrie dieses zweiten Seitenrandes (4") bestimmt,
wobei sich die Sperrvorrichtung zumindest teilweise an der unteren Ecke (7) der Entladeöffnung (4) befindet, die zwischen dem zweiten Seitenrand (4") und dem unteren Längsrand (4‴) der Öffnung (4) gebildet wird, die sich in der Ebene des Bodens (2') des Behälters (2) befindet, und/oder an der oberen Ecke (7') der Entladeöffnung (4), die zwischen dem zweiten Seitenrand (4") und dem oberen Längsrand (4‴) der Öffnung (4) gebildet wird, wobei die Sperrvorrichtung (6) aus einem Plattenabschnitt besteht, der eine zu der unteren oder oberen Ecke (7) konjugierte dreieckige Form aufweist, wobei eine freiliegende Seite einen konkav oder geradlinig gekrümmten funktionalen oder Angriffsrand (6') bildet, **dadurch gekennzeichnet, dass** die Verringerung des Durchgangsquerschnitts der Entladeöffnung (4), die sich aus dem Vorhandensein der mindestens einen Sperrvorrichtung (6) ergibt, mehr als 2 % und weniger als 20 % des Durchgangsquerschnitts beträgt, vorzugsweise zwischen 2 % und 15 % liegt, und dass die beiden Seiten des oder jedes Dreiecks, die die Sperrvorrichtung (6) bilden, mit Ausnahme der Seite, die einen funktionalen oder Angriffsrand (6') bildet, sich jeweils bis zu einem Wert zwischen einem Fünfzehntel und einem Viertel der Breite (L) und bis zu einem Wert zwischen einem Achtel und der Hälfte der Höhe (H) der Entladeöffnung (4) erstrecken, und zwar vom Winkel der betreffenden Ecke (7, 7') aus.

2. Landwirtschaftliche Ausrüstung (1) nach Anspruch 1, **dadurch gekennzeichnet, dass** sich die Sperrvorrichtung (6) über die gesamte Länge des zweiten Seitenrandes (4") erstreckt und vorteilhafterweise aus zwei identischen Teilen (8 und 8') besteht, die symmetrisch zur Mittellinie sind, die sich in der Mitte der Höhe (H) der Entladeöffnung (4) erstreckt.

3. Landwirtschaftliche Ausrüstung (1) nach einem der Ansprüche 1 bis 2, **dadurch gekennzeichnet, dass** die Sperrvorrichtung (6) am Behälter (2) angebracht ist und einen unteren Teil mit einer sehr kleinen Fläche und einen oberen Teil mit einer sehr großen Fläche aufweist, wobei sich der untere Teil von dem Winkel der unteren Ecke (7) bis zu weniger als einem Viertel der Breite (L) und bis zu weniger als der Hälfte der Höhe (H) der Entladeöffnung (4) erstreckt, während sich der obere Teil von dem Winkel der oberen Ecke (7') bis zu mehr als einem Viertel der Breite (L) und bis zu mehr als der Hälfte der Höhe (H) erstreckt.

4. Landwirtschaftliche Ausrüstung (1) nach einem der Ansprüche 1 bis 3, **dadurch gekennzeichnet, dass** die Sperrvorrichtung (6) aus mindestens einem Wandabschnitt (8, 8') besteht, der die Geometrie des zweiten Seitenrandes (4") der Entladeöffnung (4) definiert, wobei dieser Wandabschnitt entweder einstückig mit der Seitenwand (2") des Behälters (2) ausgebildet und in diese integriert ist oder als separates Teil angebracht ist, das mechanisch oder durch Schweißen an der Seitenwand (2") befestigt ist, wobei sich der oder jeder integrierte oder angebrachte Wandabschnitt (8, 8') in Kontinuität und bündig mit der Seitenwand (2") erstreckt.

5. Landwirtschaftliche Ausrüstung (1) nach einem der Ansprüche 1 bis 4, **dadurch gekennzeichnet, dass** sie eine Schiebetür oder einen Schieber (9) zum Verschließen der Entladeöffnung (4) umfasst, wobei Führungsschienen (10 und 10') an der Außenseite der Seitenwand (2") des Behälters (2) entlang zweier gegenüberliegender Kanten (4' und 4"; 4‴ und 4ʺʺ) der genannten Öffnung (4) befestigt sind, um eine horizontale oder vertikale Verschiebung des genannten Schiebers (9) zwischen einer Schließposition und einer Öffnungsposition der Entladeöffnung (4) zu ermöglichen.

6. Landwirtschaftliche Ausrüstung (1) nach einem der Ansprüche 1 bis 5, **dadurch gekennzeichnet, dass** sie mindestens ein im Behälter (2) montiertes drehbares Element (5) umfasst.

7. Landwirtschaftliche Ausrüstung (1) nach einem der Ansprüche 1 bis 6, **dadurch gekennzeichnet, dass** sie eine Vorrichtung zum Transportieren des Produkts umfasst, das aus der Entladeöffnung (4) austritt.

## Claims

1. Agricultural equipment for distribution of product, such as a mixer, comprising a tank (2) having a bottom (2') and a lateral wall (2'), mounted on a chassis (3) and provided with at least one discharge opening (4) made in said lateral wall (2") and defining a passage of general quadrilateral form, preferably rectangular, a rotary drive mechanism (5) that conveys the product through the opening (4) being mounted in said tank (2) and defining the first and second lateral rims (4' and 4") of said opening (4) in the direction of rotation (R) of said mechanism (5),
the said discharge opening (4) being provided in the region of said second lateral wall (4") with at least one surface-occupying or volume-occupying obstructive structure (6) that reduces the passage cross section of said opening (4) and/or determines the geometry of said second rim (4") at least partly,
the obstructive structure being situated at least partly at the level of the lower corner (7) of the discharge opening (4) formed between the second lateral rim (4") and the lower longitudinal rim (4‴) of the opening (4), which is situated in the plane of the bottom (2') of the tank (2) and/or at the level of the upper corner (7') of the discharge opening (4) formed between the second lateral rim (4") and the longitudinal rim (4ʺʺ) of said opening (4), the obstructive structure (6) consisting of a portion of plate having a triangular shape conjugate relative to said upper or lower corner (7) with an exposed side forming a concavely curved or straight functional or leading rim (6'), **characterised in that** the reduction of the passage cross section of the discharge opening (4) resulting from the presence of said at least one obstructive structure (6) is greater than 2% and less than 20% of said passage cross section, preferably between 2% and 15%, and **in that** the two sides of the or each triangle constituting the obstructive structure (6), in contrast to the side forming a functional or leading rim (6'), extend respectively to extend respectively to a value between one fifteenth and one quarter of the width (L) and to a value between one eighth and one half of the height (H) of the discharge opening (4), in each case from the angle of the corresponding corner (7, 7').

2. Agricultural equipment (1) according to claim 1, **characterised in that** the obstructive structure (6) extends over the entire length of the second lateral rim (4") and is advantageously constituted of two identical parts (8 and 8'), which are symmetric relative to the centreline extending to the half of the height (H) of the discharge opening (4).

3. Agricultural equipment (1) according to any one of claims 1 to 2, **characterised in that** the obstructive structure (6) is attached on the tank (2) and has a lower part with a very small surface and an upper part with a very large surface, said lower part extending from the angle of the lower corner (7) to at least one quarter of the width (L) and to at least half of the height (H) of the discharge opening (4), while the upper part extends from the angle of the upper corner (7') to more than one quarter of the width (L) and to more than one half of the height (H).

4. Agricultural equipment (1) according to any one of claims 1 to 3, **characterised in that** the obstructive structure (6) consists of at least one wall portion (8, 8') defining the geometry of the second lateral rim (4") of the discharge opening (4), said wall portion being either in one piece with and integrated into the lateral wall (2") of the tank (2) or attached as a separate part, which is fixed mechanically or by welding to said lateral wall (2"), said or each integrated or attached wall portion (8, 8') extending in the continuation of said lateral wall (2") and in a manner flush therewith.

5. Agricultural equipment (1) according to any one of claims 1 to 4, **characterised in that** it comprises a sliding door or slide (9) to close off the discharge opening (4), guide rails (10 and 10') being fixed on the outside of the lateral wall (2") of the tank (2) along two opposite rims (4' and 4"; 4‴ and 4ʺʺ) of said opening (4), for horizontal or vertical displacement of said slide (9) between a closed position and an open position of the discharge opening (4).

6. Agricultural equipment (1) according to any one of claims 1 to 5, **characterised in that** it comprises at least one rotary mechanism (5) mounted in the tank (2).

7. Agricultural equipment (1) according to any one of claims 1 to 6, **characterised in that** it comprises a device for transfer of the product emerging from the discharge opening (4).
